(19) Europäisches Patentamt
European Patent Office
Office européen des brevets

(11) **EP 4 744 505 A1**

(12) **EUROPEAN PATENT APPLICATION**

(43) Date of publication:
**20.05.2026 Bulletin 2026/21**

(21) Application number: **24213574.7**

(22) Date of filing: **18.11.2024**

(51) International Patent Classification (IPC):
*A23G 9/14* (2006.01)     *A23G 9/16* (2006.01)
*A23G 9/20* (2006.01)     *A23G 9/26* (2006.01)
*A23G 9/28* (2006.01)     *A23G 9/46* (2006.01)
*A23G 9/48* (2006.01)     *A23G 9/50* (2006.01)
*A23G 9/22* (2006.01)

(52) Cooperative Patent Classification (CPC):
**A23G 9/14; A23G 9/16; A23G 9/20; A23G 9/22;
A23G 9/26; A23G 9/28; A23G 9/46; A23G 9/48;
A23G 9/50**

(84) Designated Contracting States:
**AL AT BE BG CH CY CZ DE DK EE ES FI FR GB
GR HR HU IE IS IT LI LT LU LV MC ME MK MT NL
NO PL PT RO RS SE SI SK SM TR**
Designated Extension States:
**BA**
Designated Validation States:
**GE KH MA MD TN**

(71) Applicant: **MAGNUM IP HOLDINGS B.V.
1017 BM Amsterdam (NL)**

(72) Inventor: **The designation of the inventor has not
yet been filed**

(74) Representative: **Potter Clarkson
Chapel Quarter
Mount Street
Nottingham NG1 6HQ (GB)**

(54) **PROCESS FOR MANUFACTURING FROZEN CONFECTION**

(57)    The invention relates to a process for the manufacture of a plurality of dimensionally similar sticked aerated frozen confections, the process comprising the steps of i) preparing a source of aerated frozen confection; ii) extruding a continuous flow of the aerated frozen confection in at least one screw extruder, such that a continuous stream of extruded aerated frozen confection leaves the screw extruder via a nozzle in an extrusion direction and at an extrusion speed, iii) sequentially inserting a plurality of grippable sticks into the continuous stream of extruded aerated frozen confection at equally spaced intervals, and such that a grippable length of each grippable stick protrudes from the aerated frozen confection, iv) sequentially cutting through the continuous stream of extruded aerated frozen confection at locations between two adjacent inserted sticks, to produce a continuous sequence of dimensionally similar sticked frozen confections,

wherein during or before the cutting, each grippable length of stick is gripped by one of a plurality of spaced apart supporting carriages, such that each dimensionally similar sticked frozen confection is supported in free space during cutting and is subsequently conveyed by its respective supporting carriage to at least one subsequent processing step.

EP 4 744 505 A1

Processed by Luminess, 75001 PARIS (FR)

## Description

### Field of the invention

The invention relates to a process for the manufacture of a plurality of dimensionally similar frozen confections comprising a stick, and an apparatus for carrying out the process.

### Background of the invention

Aerated frozen confections such as ice cream, is commonly produced by extruding a flow of continuous material that is then cut to produce the individual frozen confections. In a common arrangement, the extrusion is carried out vertically or horizontally on a belt after which the cut frozen confection falls under gravity onto a surface, which is then passed to a cooling tunnel to harden the frozen confection so that it can be passed through subsequent processing steps in a frozen state.

The use of extrusion to form frozen confections such as ice cream or sorbet are well-known. In an example of a commercial process, a continuous stream of extruded frozen confection is generated at around -6°C, which is cut into billets, and into which a stick may be inserted. Such processes are sometimes referred to as extrude-and-cut processes. In such processes a sequence of sticks is inserted, followed by the cutting, to produce a sequence of dimensionally similar sticked frozen confections. This is then followed by passing the sticked frozen confections through a hardening tunnel to reduce their temperature to around -18°C before subsequent processing steps such as coating, decorating and wrapping are carried out. This can produce the dimensionally similar frozen confections at a fast rate, e.g. around 180 per minute.

A discussion of a standard manufacturing process for frozen aerated confections is described in detail in, for example, "Ice Cream", 6th Edition, chapters 6, 7 and 9. This consists of a number of steps: i) mixing the ingredients, ii) pasteurisation and homogenisation, iii) ageing, iv) aerating and partially freezing the mix in an ice cream freezer, and v) drawing the partially frozen aerated confection from the freezer, and vi) hardening.

US 2005/0214416 discloses extrusion of aerated ice cream or sorbets from a twin screw extruder.

US 2006/0233919 A1 discloses a process for manufacture of a frozen aerated confection, wherein an initial freezing step is carried out in a preliminary freezing and aeration step, followed by further freezing in a cold extrusion step. Examples of extrusion temperatures are in the range of from -9°C to -15°C. However, the torque required to extrude the ice cream increases significantly as the temperature of extrusion drops over this range.

US 6 228 412 discloses a mon-screw extrusion process for manufacturing frozen aerated products, particularly ice cream.

WO2009/068428 A1 discloses a method of producing an extruded, preferably unaerated, water-based frozen composition having a high ice content. In this case, the barrel is cooled with a coolant so as to form the frozen composition which remains extrudable, such as by a cooling jacket, but may be unchilled near the exit, so that the extruded confection may leave the extruder closer to ambient temperature.

However there remains a need to provide a continuous production of dimensionally similar sticked frozen confections at higher rates of production.

Summary of the Invention

The invention relates to a process for the manufacture of a plurality of dimensionally similar sticked aerated frozen confections, the process comprising the steps of

i) preparing a source of aerated frozen confection
ii) extruding a continuous flow of the aerated frozen confection in at least one screw extruder, such that a continuous stream of extruded aerated frozen confection leaves the screw extruder via a nozzle in an extrusion direction and at an extrusion speed,
iii) sequentially inserting a plurality of grippable sticks into the continuous stream of extruded aerated frozen confection at equally spaced intervals, and such that a grippable length of each grippable stick protrudes from the aerated frozen confection,
iv) sequentially cutting through the continuous stream of extruded aerated frozen confection at locations between two adjacent inserted sticks, to produce a continuous sequence of dimensionally similar sticked frozen confections,

wherein during or before the cutting, each grippable length of stick is gripped by one of a plurality of spaced apart supporting carriages, such that each dimensionally similar sticked frozen confection is supported in free space during cutting and is subsequently conveyed by its respective supporting carriage to at least one subsequent processing step.

One of the main technical benefits of the present invention is that it enables the high production rate of a plurality of dimensionally similar frozen confections to be made.

Frozen confection means a confection made by freezing a pasteurised mix of ingredients such as water, fat, sweetener, protein (normally milk proteins), and optionally other ingredients such as emulsifiers, stabilisers, colours and flavours. Frozen confections may be aerated. Frozen confections include ice cream, gelato, frozen yoghurt, sorbets, granitas, shaved ices and the like. Preferably the frozen confectionery is an ice cream.

The term "aerated" means that gas has been intentionally incorporated into the product, such as by mechanical means. The gas can be any food-grade gas such as air, nitrogen or carbon dioxide. The extent of aeration is typically defined in terms of "overrun" (OR). In the context of the present invention, %overrun is defined in volume terms (measured at atmospheric pressure) as:

$$OR = \frac{\text{volume of frozen aerated product} - \text{volume of premix at ambient temp}}{\text{volume of premix at ambient temp}} \times 100$$

The amount of overrun present in the product will vary depending on the desired product characteristics. In the context of the present invention the level of overrun is typically from 0 to 150%, preferably from 60 to 150%, more preferably from 60 to 100%.

Unless defined otherwise, all technical and scientific terms used herein have the same meaning as commonly understood by one of ordinary skill in the art (e.g. in frozen food manufacture). Definitions and descriptions of various terms and techniques used in frozen confectionery manufacture are found in "Ice Cream", 7th Edition R.T. Marshall, H.D. Goff and R.W. Hartel, Kluwer Academic/ Plenum Publishers, New York 2013.

It is particularly advantageous that the extruded aerated frozen confection is at a temperature of from -10°C to -19°C. Such a temperature is much lower than that typically extruded, and results in a harder material. Additionally, it has been found that no further cooling stages are needed, such as hardening tunnels, even if coatings are applied by dipping. This allows for a substantial increase in the processing speed.

Preferably the extrusion direction is a horizontal direction and the sticks are inserted in a direction that is within a vertical plane. This allows for greater dimensional stability of the sticked aerated frozen confection, as it can be supported by the stick and hang vertically therefrom.

Preferably the nozzle comprises an elongate slit aligned in the extrusion direction exposing an elongate strip of extruded aerated frozen confection, the grippable sticks being inserted into the elongate strip of extruded aerated frozen confection.

Preferably the extrusion speed is greater than 5cm/s, preferably from 5 to 20cm/s, more preferably from 8 to 15 cm/s.

Preferably the velocity of the sticks during insertion have a component of velocity perpendicular to the extrusion direction and a component of velocity parallel to the extrusion direction. Preferably the component of velocity parallel to the extrusion direction is substantially the same as the extrusion speed. This provides the beneficial technical effect that there is no relative lateral movement between the sticks and the frozen confections, so the sticks may be inserted cleanly and neatly.

It is also preferred that the velocity of the blade during cutting has a component of velocity perpendicular to the extrusion direction and a component of velocity parallel and in the same direction as the extrusion direction. Preferably the component of velocity parallel to the extrusion direction is substantially the same as the speed of extrusion. Again, this provides a clean cut through the extruded aerated frozen confection.

By using supporting carriages the distance between supported sticked frozen confections can also be governed. Thus, preferably the plurality of supporting carriages are adapted to have a variable separation between adjacent carriages.

This can be conveniently achieved by the use of threaded scrolls, where each carriage is located within the rotating thread, and the spacings of the threads governs the spacings of the carriages. This can also be used to rotate the carriages, and therefore the sticked frozen confections, which could be particularly useful for subsequent processing operations such as decorating the surface of the frozen confection. Additionally, the size of the threads can be manipulated to control the spacing between the carriages.

It has been found to be particularly convenient to arrange the spacing between adjacent supporting carriages to increase during the cutting. This provides a smooth and timely separation of adjacent frozen confections at the moment of cutting.

Preferably the plurality of spaced apart supporting carriages are mounted on an endless track. Such a track may then provide the general pathway that each carriage follows in three dimensions, and thus the pathway that each sticked frozen confection follows.

To give a further degree of freedom, preferably the plurality of supporting carriages are adapted such that each gripped stick is rotatable relative to the carriage. In particular, providing rotation where the axis of rotation is perpendicular to the track is particularly advantageous.

In a preferred arrangement, each dimensionally similar sticked frozen confection is supported in free space as it is conveyed by its respective supporting carriage to and through a dipping stage. Furthermore, each dimensionally similar sticked frozen confection may be supported in free space as it is conveyed by its respective supporting carriage to a packaging stage. In this way, the various stages can be carried out sequentially with the sticked frozen confection being carried by its respective carriage.

Preferably, the frozen confection is supported in free space as it is conveyed by its respective supporting carriage to and through a dipping stage, and wherein, during the dipping, there is no lateral movement between the frozen confection and the coating liquid. This reduces the sideways forces on the frozen confection, so that it can withstand the forces of dipping without losing contact with the supporting stick.

As previously discussed, the present invention allows for the production of packaged sticked frozen confections without the need for a hardening tunnel. And therefore preferably each dimensionally similar sticked aerated frozen confection proceeds through at least one subsequent processing step without any additional cooling applied. Optionally cooling may be applied, or the entire process or part of it may be carried out in a cooled atmosphere, however this is not essential.

Preferably the coating may completely surround or partially surround the frozen confection. Suitable fat-based confections include chocolate (dark chocolate, white chocolate, milk chocolate), or a chocolate analogue or couverture. The term "chocolate" is not intended to be limited to compositions that can legally be described as chocolate in any particular country but includes any products having the general character of chocolate. It therefore includes chocolate-like materials which are made using fats other than cocoa butter (for example coconut oil). Chocolate usually contains non-fat cocoa solids, but it is not essential that it does so (e.g. white chocolate). The term chocolate analogue means chocolate-like fat-based confectionery compositions made with fats other than cocoa butter (for example cocoa butter equivalents, coconut oil or other vegetable oils). Such chocolate analogues are sometimes known as couvertures. Chocolate analogues need not conform to standardized definitions of chocolate which are used in many countries. In addition to fat and cocoa solids, chocolate and chocolate analogues may contain milk solids, sugar or other sweeteners and flavourings. A fat-based coating may consist essentially of vegetable oil and sugar, together with colours and / or flavours as required. Alternative coatings includes nut-based coatings, such as pistachio or similar material.

Coatings are typically applied to the frozen confection as liquids, but solidify over time as they cool down, for example as a result of contact with the frozen confection. Chocolates have complex solidification behaviour because they contain mixtures of different triglycerides which can crystallize in different forms. For example, cocoa butter can exist in six different crystalline forms (polymorphs). As chocolate solidifies, triglycerides begin to crystallize. Within a few seconds the chocolate becomes dry to the touch and has plastic or leathery texture.

Crystallization continues slowly, so that it typically takes several hours or days for the triglycerides to fully crystallize and so that the chocolate reaches its maximum brittleness. Chocolate made from fats other than cocoa butter displays similar behaviour, but typically crystallizes over a narrower temperature range and reaches maximum brittleness more quickly. Preferably the coating is chocolate.

The thickness of any coating can vary according to the particular design of frozen confectionery. However coating thicknesses of from 0.5 to 3mm are preferred, more preferably from 1mm to 2mm.

The invention will now be illustrated by way of example, and with reference to the following figures, in which:

Figure 1 is a schematic perspective view of an initial portion of an apparatus for carrying out the process according to the present invention.

Figure 2 is a perspective view of a subsequent portion of the apparatus shown in figure 1 at a later point in time during a first coating stage.

Figure 3 is a perspective view of a subsequent portion of the apparatus shown in figure 1 at a later point in time during a second coating stage.

Figure 4 is a perspective view of a subsequent portion of the apparatus shown in figure 1 at a later point in time during a second coating stage.

Figure 5 is an image of a side view through an apparatus for carrying out the process of the present invention.

Figure 6 is a perspective view of the subsequent processing step of coating produced aerated frozen confections.

Figure 7 is a perspective view of the subsequent processing step of packaging produced aerated frozen confections.

Turning to the figures, shown is a nozzle **10** through which is flowing a continuous stream of extruded aerated frozen confection **12** which leaves the screw extruder via a nozzle in a horizontal extrusion direction and at an extrusion speed. Above the nozzle 10 is a plurality of equally spaced apart supporting carriages **14** moveably mounted in a frame **16,** and arranged to move in the horizontal extrusion direction and at essentially the same speed as the extrusion speed. Each carriage **14** grips a grippable length of a stick **18**.

The continuous stream of extruded aerated frozen confection **12** has been previously screw extruded and is at a temperature of from -10°C to -19°C, which results in a hardened physical condition.

The nozzle **10** comprises an elongate slit **20** aligned in the extrusion direction exposing an elongate strip **22** of extruded aerated frozen confection.

In operation of the apparatus, as the carriages **14** are moved horizontally they also descend vertically, so that each gripped stick **18** is forced into the aerated frozen confection **22** as the carriage **14** moves horizontally in the direction of the elongate slit **20** in the nozzle **10**. As the horizontal velocity of the carriages **14** is essentially the same as the extrusion speed, the sticks **18** are inserted with no relative horizontal movement between the sticks **18** and the extruded aerated frozen confection **22**.

Once the aerated frozen confection **22** leaves the nozzle, a blade (not shown) cuts completely through the cross-section of the aerated frozen confection **22** at a location midway between the location of two adjacent inserted sticks **14**. This can be mechanically arranged by synchronising the movement of the blade with the location of the carriages in the frame.

This results in a sequence of a plurality of dimensionally similar sticked frozen confections **24,** supported in free space during and following cutting. As the aerated frozen confection **22** is already hardened, there is no need for a hardening tunnel, and the sticked frozen confections **24** can then be subsequently conveyed by its respective supporting carriage **14** directly to at least one subsequent processing step, such as coating, wrapping and packaging steps.

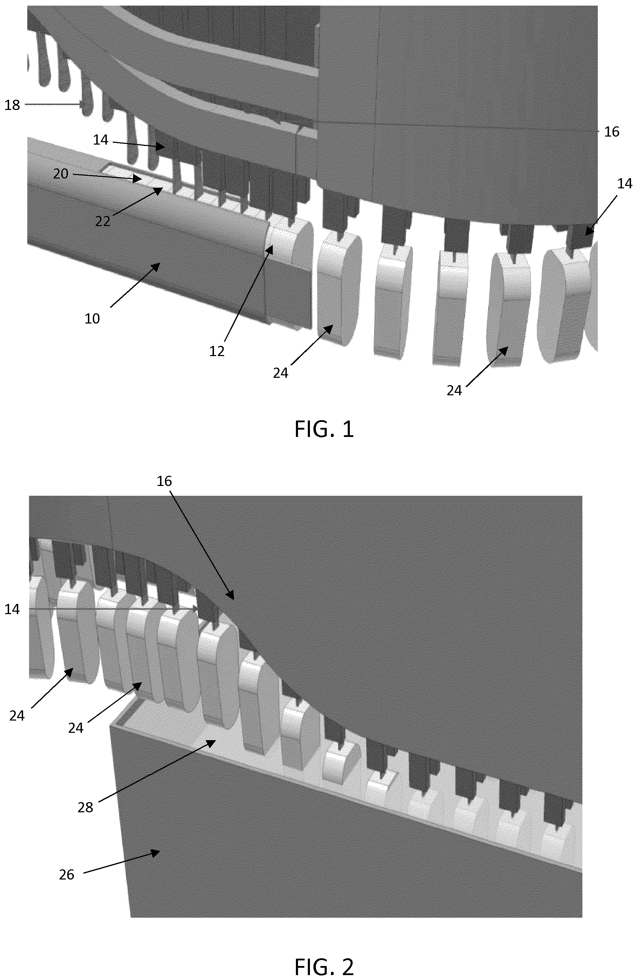

Figure 2 shows a subsequent processing step of coating, where the sequence of dimensionally similar sticked frozen confections **24** approach a bath **26** containing the first coating liquid **28**. As they approach, the carriages **14** descend vertically due to the arrangement of the frame **16,** so that each sticked frozen confection **24** descends into the first coating liquid **28**.

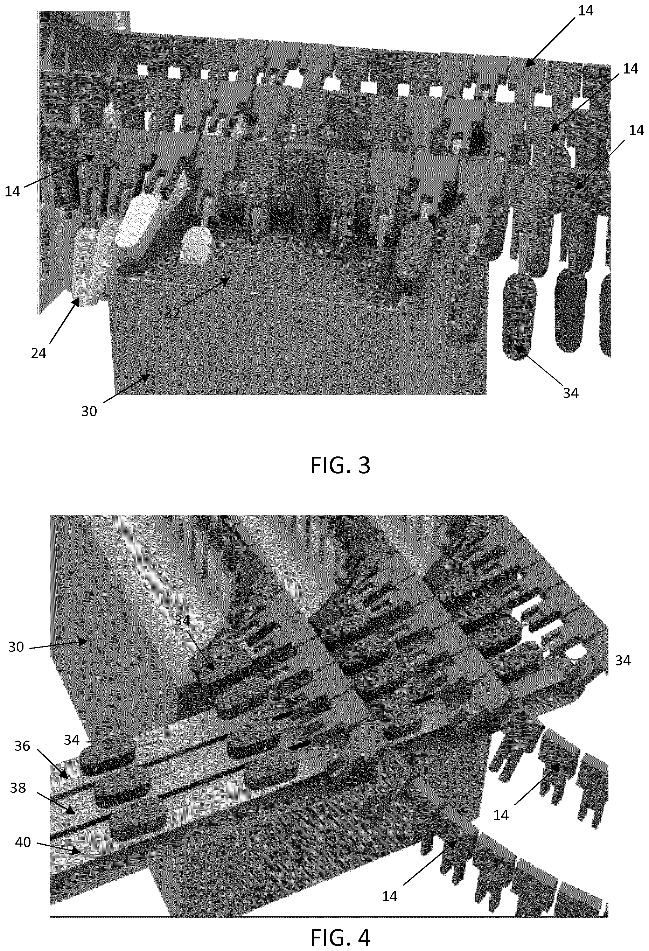

Figure 3 shows a second coating step where the sequence of dimensionally similar sticked frozen confections **24** approach another bath **30** containing a second coating liquid **32,** which in this case is a chocolate coating. In this case the carriages **14** are rotated about a horizontal axis to raise each sticked frozen confection **24** above the height of the bath **30**. Each carriage **14** is then rotated again in the opposite sense, in order to dip the frozen confection **24** into the second coating liquid **32**. The carriages **14** are then once more rotated the allow the coated aerated frozen confections **34** to pass over the side of the bath **30**. This is followed by a further and final rotation of the carriages **14** to return the coated sticked frozen confections **34** to a vertical position. As the aerated frozen confection is at the low temperature of -10°C to -19°C the chocolate coating quickly solidifies without the need for additional cooling being applied.

It may also be seen that two additional lines of dimensionally similar sticked frozen confections **24** supported in free space by its respective supporting carriage **14** are provided. This merely increases the production rate of the frozen confections **24**.

Figure 4 shows a further processing step, where three conveyor belts **36, 38, 40** are provided. Each of the three lines of dimensionally similar sticked frozen confections **34** supported in free space are rotated to a horizontal orientation by rotation of their respective carriage **14,** as the conveyor belts **36, 38, 40** are approached. The carriages **14** are then arranged to let go of the stick **18** in a coordinated timing to result in a sequence of sticked and coated frozen confections **34** lying on the conveyor belt surface **36, 38, 40**. These can then pass to a wrapping machine and can be subsequently boxed by known means.

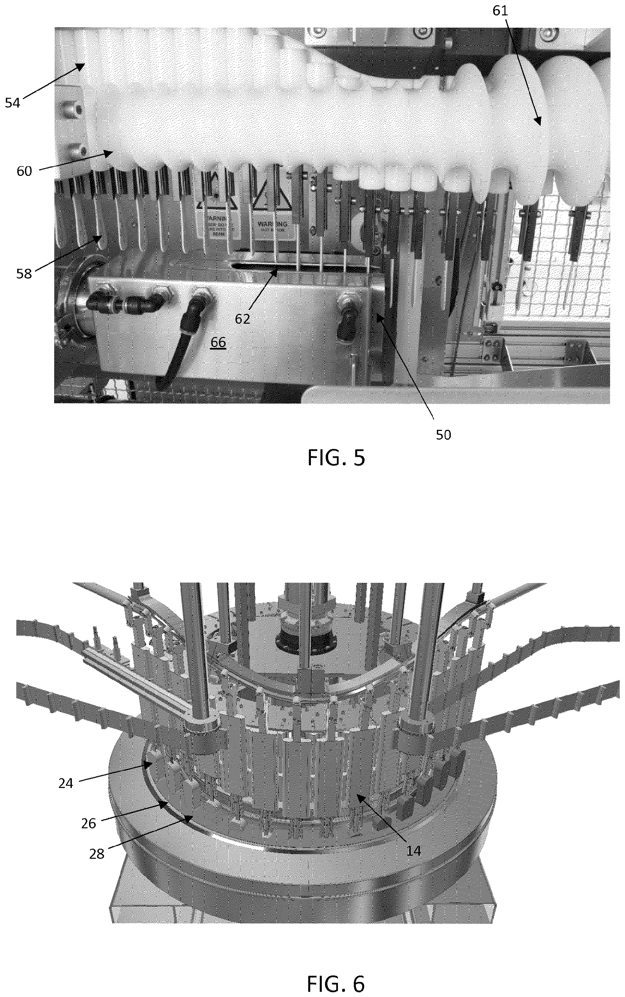

Figure 5 shows another apparatus for carrying out the process of the present invention. Shown is a nozzle **50** through which can flow a continuous stream of extruded aerated frozen confection. Above the nozzle **50** is a plurality of equally spaced apart supporting carriages **54** arranged to move in the horizontal extrusion direction and at essentially the same speed as the extrusion speed. Each carriage **54** grips a grippable length of a stick **58**. Each carriage is shaped to snugly fit within the thread of a scroll **60**.

The nozzle **50** comprises an elongate slit **62** aligned in the extrusion direction. The nozzle has also been surrounded by a water jacket **66** which warms the extruded frozen confection.

In operation of the apparatus, the scrolls rotate along their horizontal axis, which causes the carriages **54** to move horizontally (from left to right in the figure). A guideway (not shown) additionally causes them to descend vertically so as to insert the sticks **58** into the elongate slit **62** when frozen confection is being extruded.

The horizontal velocity of the carriages **54** is essentially the same as the extrusion speed, and so the sticks **58** are inserted with no relative horizontal movement between the sticks **58** and the extruded aerated frozen confection.

It can be seen that the thread of the scroll **60** increases in region **61,** which provides the effect that the spacing of the carriages is increased, at the point of exit from the nozzle **50** so as to separate the produced individual aerated frozen confections after cutting.

Figure 6 shows a preferred type of subsequent processing step of coating the dimensionally similar sticked aerated frozen confections, once produced. The sequence of dimensionally similar sticked frozen confections **24** approach a bath **26** containing the first coating liquid **28**. As they approach, the carriages **14** descend vertically, so that each sticked frozen confection **24** descends into the first coating liquid **28**. In this embodiment however, the bath **26** rotates in a counter-clockwise manner (as viewed from above) at a speed that matches the speed of movement of the frozen confections **24,** so that when they are in the coating liquid **28** there is no relative lateral movement between the frozen confections **24** and the coating liquid **28**.

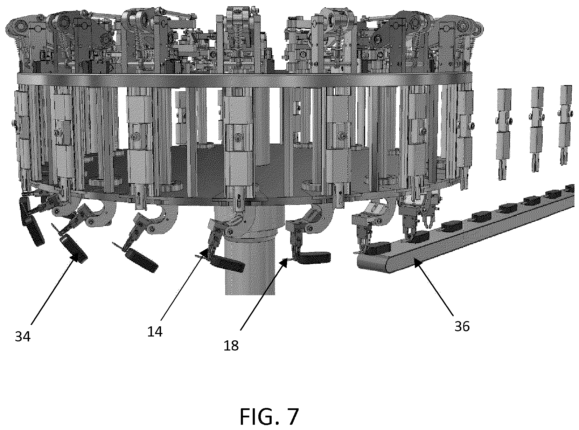

Figure 7 shows a preferred type of further processing step, where a conveyor belt **36** is provided. The line of dimensionally similar sticked frozen confections **34** supported in free space are rotated to a horizontal orientation by rotation of their respective carriage **14**, as the conveyor belt **36** is approached. The carriages **14** are then arranged to let go of the stick **18** in a coordinated timing to result in a sequence of sticked and coated frozen confections **34** lying on the conveyor belt surface **36**. These can then pass to a wrapping machine and can be subsequently boxed by known means. In this preferred embodiment, the speed of the conveyor belt matches that of the speed of movement of the frozen confections **24,** so that when they are deposited thereon there is no relative lateral movement between the frozen confections **24** and the conveyor belt **36**.

## Claims

1. A process for the manufacture of a plurality of dimensionally similar sticked aerated frozen confections, the process comprising the steps of

   i) preparing a source of aerated frozen confection
   ii) extruding a continuous flow of the aerated frozen confection in at least one screw extruder, such that a continuous stream of extruded aerated frozen confection leaves the screw extruder via a nozzle in an extrusion direction and at an extrusion speed,
   iii) sequentially inserting a plurality of grippable sticks into the continuous stream of extruded aerated frozen confection at equally spaced intervals, and such that a grippable length of each grippable stick protrudes from the aerated frozen confection,
   iv) sequentially cutting through the continuous stream of extruded aerated frozen confection at locations between two adjacent inserted sticks, to produce a continuous sequence of dimensionally similar sticked frozen confections,

   wherein during or before the cutting, each grippable length of stick is gripped by one of a plurality of spaced apart supporting carriages, such that each dimensionally similar sticked frozen confection is supported in free space during cutting and is subsequently conveyed by its respective supporting carriage to at least one subsequent processing step.

2. A process according to any one of the preceding claims, wherein the extruded aerated frozen confection is at a temperature of from -10°C to -19°C.

3. A process according to claim 1 or claim 2, wherein the extrusion direction is a horizontal direction and the sticks are inserted in a direction that is within a vertical plane.

4. A process according to any one of the preceding claims, wherein the nozzle comprises an elongate slit aligned in the extrusion direction exposing an elongate strip of extruded aerated frozen confection, the grippable sticks being inserted into the elongate strip of extruded aerated frozen confection.

5. A process according to any one of the preceding claims, wherein the extrusion speed is greater than 5cm/s, preferably from 5 to 20cm/s, more preferably from 8 to 15 cm/s.

6. A process according to any one of the preceding claims, wherein the velocity of the sticks during insertion have a component of velocity perpendicular to the extrusion direction and a component of velocity parallel to the extrusion direction.

7. A process according to claim 6, wherein the component of velocity parallel to the extrusion direction is substantially the same as the extrusion speed.

8.  A process according to any one of the preceding claims, wherein the plurality of supporting carriages are adapted to have a variable separation between adjacent carriages.

9.  A process according to claim 8, wherein the spacing between adjacent supporting carriages increases during the cutting.

10. A process according to any one of the preceding claims, wherein the plurality of spaced apart supporting carriages are mounted on an endless track.

11. A process according to any one of the preceding claims, wherein the plurality of supporting carriages are adapted such that each gripped stick is rotatable relative to the carriage, preferably wherein the axis of rotation is perpendicular to the track.

12. A process according to any one of the preceding claims, wherein each carriage is located within the rotating thread of a threaded scroll, and the spacings of the threads governs the spacings of the carriages.

13. A process according to any one of the preceding claims, wherein each dimensionally similar sticked frozen confection is supported in free space as it is conveyed by its respective supporting carriage to and through a dipping stage, and/or to a packaging stage.

14. A process according to claim 13, wherein each dimensionally similar sticked frozen confection is supported in free space as it is conveyed by its respective supporting carriage to and through a dipping stage, and wherein, during the dipping, there is no lateral movement between the frozen confection and the coating liquid.

15. A process according to any one of the preceding claims, wherein each dimensionally similar sticked aerated frozen confection proceeds through at least one subsequent processing step without any additional cooling applied.

FIG. 1

FIG. 2

FIG. 3

FIG. 4

FIG. 5

FIG. 6

34

14

18

36

FIG. 7

**EUROPEAN SEARCH REPORT**

Application Number

EP 24 21 3574

## DOCUMENTS CONSIDERED TO BE RELEVANT

| Category | Citation of document with indication, where appropriate, of relevant passages | Relevant to claim | CLASSIFICATION OF THE APPLICATION (IPC) |
|---|---|---|---|
| X | US 2 859 714 A (CUMMINGS THOMAS N ET AL) 11 November 1958 (1958-11-11) * column 2, line 48 - column 2, line 55; claims 1,4; figure 1 * * column 5, line 14 - column 5, line 34 * * column 1, line 30 - column 1, line 35 * * column 3, line 9 - column 3, line 30 * * column 3 - column 4 * ----- | 1-15 | INV. A23G9/14 A23G9/16 A23G9/20 A23G9/26 A23G9/28 A23G9/46 A23G9/48 A23G9/50 A23G9/22 |

TECHNICAL FIELDS
SEARCHED (IPC)

A23G

The present search report has been drawn up for all claims

| Place of search | Date of completion of the search | Examiner |
|---|---|---|
| The Hague | 15 April 2025 | Gieler, Melanie |

CATEGORY OF CITED DOCUMENTS

X : particularly relevant if taken alone
Y : particularly relevant if combined with another document of the same category
A : technological background
O : non-written disclosure
P : intermediate document

T : theory or principle underlying the invention
E : earlier patent document, but published on, or after the filing date
D : document cited in the application
L : document cited for other reasons

& : member of the same patent family, corresponding document

EPO FORM 1503 03.82 (P4C01)

## ANNEX TO THE EUROPEAN SEARCH REPORT
## ON EUROPEAN PATENT APPLICATION NO.

EP 24 21 3574

This annex lists the patent family members relating to the patent documents cited in the above-mentioned European search report.
The members are as contained in the European Patent Office EDP file on
The European Patent Office is in no way liable for these particulars which are merely given for the purpose of information.

15-04-2025

| Patent document cited in search report | Publication date | Patent family member(s) | Publication date |
|---|---|---|---|
| US 2859714 A | 11-11-1958 | NONE | |

EPO FORM P0459

For more details about this annex : see Official Journal of the European Patent Office, No. 12/82

**REFERENCES CITED IN THE DESCRIPTION**

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- US 20050214416 A
- US 20060233919 A1
- US 6228412 B
- WO 2009068428 A1

**Non-patent literature cited in the description**

- Ice Cream
- **R.T. MARSHALL** ; **H.D. GOFF** ; **R.W. HARTEL**. Ice Cream. Kluwer Academic, 2013